(19) Europäisches Patentamt
European Patent Office
Office européen des brevets

(11) **EP 3 736 075 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **19173128.0**

(22) Anmeldetag: **07.05.2019**

(51) Internationale Patentklassifikation (IPC):
**B23K 11/00** (2006.01)   **B23K 11/02** (2006.01)
**B23K 11/16** (2006.01)   **B23K 11/25** (2006.01)
*B23K 103/04* (2006.01)   *B23K 101/16* (2006.01)
*B23K 101/18* (2006.01)

(52) Gemeinsame Patentklassifikation (CPC):
**B23K 11/0073; B23K 11/02; B23K 11/16;**
**B23K 11/25;** B23K 2101/16; B23K 2101/18;
B23K 2103/04

(54) **OPTIMIERTES VERFAHREN ZUM ABKÜHLEN EINER SCHWEISSNAHT EINES WIDERSTANDSSTUMPFGESCHWEISSTEN WERKSTÜCKS**

OPTIMIZED METHOD FOR COOLING A WELD SEAM OF A RESISTANCE WELDED WORKPIECE

PROCÉDÉ OPTIMISÉ DE REFROIDISSEMENT D'UN CORDON DE SOUDURE D'UNE PIÈCE SOUDÉE BOUT À BOUT PAR RÉSISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.11.2020 Patentblatt 2020/46**

(73) Patentinhaber: **Ideal-Werk C. & E. Jungeblodt GmbH & Co.KG**
**59557 Lippstadt (DE)**

(72) Erfinder: **JUNGEBLODT, Max Clemens**
**59555 Lippstadt (DE)**

(74) Vertreter: **Schäperklaus, Jochen et al**
**Fritz Patent- und Rechtsanwälte**
**Partnerschaft mbB**
**Postfach 1580**
**59705 Arnsberg (DE)**

(56) Entgegenhaltungen:
WO-A2-2013/134112    DE-A1- 102011 107 309
GB-A- 688 244    US-A- 3 818 173
US-A1- 2004 245 223    US-A1- 2010 059 488
US-A1- 2017 072 501

**Beschreibung**

Die vorliegende Erfindung betrifft ein Verfahren zum Abkühlen einer Schweißnaht eines widerstandsstumpfgeschweißten Stahlbandes nach einem Verbinden von zwei Enden durch Schweißen, wobei die Enden Enden des Stahlbandes oder Enden von zwei Einzelteilen des Stahlbandes sind.

Verfahren zum Abkühlen einer Schweißnaht eines widerstandsstumpfgeschweißten Stahlbandes gemäß dem Oberbegriff des Anspruchs 1 sind beispielsweise aus den Druckschriften US 2010/059488 A1, WO 2013/134112 A2 und GB 688 244 A bekannt. I

Bei dem Herstellen einer Schweißnaht eines Stahlbandes mittels eines Widerstandstumpfschweißprozesses kommt es in einigen Anwendungsbereichen auf eine besonders hohe Qualität der Schweißnaht an.

So werden Stahlbänder unter anderem geschweißt, um als Bandmesser und/oder Bandsägen verwendet zu werden.

Diese werden nach dem Schweißprozess auf eine vorgegebene Stärke geschliffen und geschärft. Ein Einsatz dieser Bandmesser ist beispielsweise in der lederverarbeitenden Industrie. Bandsägen werden beispielsweise zum Trennen verschiedenster Werkstoffe verwendet.

Kleinste Veränderungen in der Oberflächenstruktur führen bei diesen Anforderungen bereits zum Ausschuss der geschweißten Stahlbänder. Hierbei führen insbesondere unterschiedliche Härten des Materials innerhalb einer Schweißnaht zu Problemen. Bei einem Einsatz als Bandmesser oder Bandsäge führen zusätzliche Biegebelastungen bei Biegeprozessen beispielsweise an Umlenkrollen zu Spannungen im Material, was zu einer Verkürzung der Lebensdauer der Schweißnaht führen kann.

Des Weiteren wird durch die Abkühlung der Schweißnaht das Gefüge beeinflusst. Dies kann zu Inhomogenitäten führen, die zu einem Bandriss an der Schweißnaht führen können.

Üblicherweise kühlen widerstandstumpfgeschweißte Stahlbänder nach dem Schweißen bei Umgebungstemperatur ab, ohne dass dieses Abkühlen einer weiteren Kontrolle unterliegt.

Nach dem Erreichen der Schweißtemperatur werden die beiden Enden des Stahlbandes zum Schweißen aufeinander zu bewegt und im Anschluss daran der Strom abgeschaltet. Maßgeblich für die Abkühlgeschwindigkeit ist die Temperaturdifferenz zwischen Stahlband und Umgebung.

Allerdings ergeben sich innerhalb der Schweißnaht bei der Abkühlung Temperaturdifferenzen, die auf unterschiedliche Ursachen zurückzuführen sind. Es sind Verunreinigungen auf dem Band nicht auszuschließen. Dadurch ergibt sich ein unterschiedlicher Energieeintrag durch den während des Schweißens angelegten Strom in das Stahlband. Ebenso hat die Geometrie der Schweißnaht über den Bandquerschnitt einen Einfluss auf das natürliche Abkühlverhalten. In den Randbereichen der Schweißnaht kühlt diese anders ab als in der Mitte. Dies ist durch allgemeine physikalische Prozesse bekannt.

Die unterschiedlichen Temperaturen innerhalb der Schweißnaht bei der Abkühlung können dazu führen, dass sich Risse und/oder Fehlstellen innerhalb der Schweißnaht bilden, auch Spannungen im Material innerhalb des Bandquerschnittes sind möglich. Dies kann zu unterschiedlichen Härten innerhalb des Materials führen, was die Qualität der Schweißnaht mindert.

An diesem Punkt setzt die vorliegende Erfindung an.

Der Erfindung lag das Problem zu Grunde ein Verfahren der eingangs genannten Art so zu verbessern, dass eine gleichmäßige Abkühlung der Schweißnaht erreicht wird, mit denen die gewünschten Qualitätsanforderungen eingehalten werden können.

Diese Aufgabe wird erfindungsgemäß durch das Verfahren zum Abkühlen einer Schweißnaht eines widerstandsstumpfgeschweißten Stahlbandes gemäß dem Anspruch 1 und die Vorrichtung gemäß dem Anspruch 4 gelöst.

Durch eine aktive Einflussnahme auf das Abkühlen der Schweißnaht ist es möglich, dass Fehlstellen und/oder Risse sowie Spannungen innerhalb der Schweißnaht vermindert oder sogar verhindert werden. Durch ein gesteuertes Abkühlen der Schweißnaht ist es möglich, dass Spannungen in dem Material vermieden werden, die durch Temperaturunterschiede während des Abkühlens hervorgerufen werden.

Gemäß der Erfindung wird während des Abkühlens ein Strom $i_2$ durch die Schweißnaht geleitet.

Vorteilhafterweise kann es vorgesehen sein, dass das Abkühlen derart gesteuert wird, dass durch Einstellen des Stromes $i_2$ und durch eine Überwachung einer vorhandenen Temperatur eine Temperaturverteilung innerhalb der Schweißnaht erreicht wird, die die Temperaturunterschiede während des Abkühlens innerhalb der Schweißnaht auf $\pm$ 10% begrenzt.

Gemäß der Erfindung wird der Strom $i_2$ folgendermaßen eingestellt :

- die tatsächliche Temperaturverteilung innerhalb der Schweißnaht wird überwacht,
- bei Temperaturabweichungen wird der ohmsche Widerstandwert an den Stellen der Schweißnaht mit einem Temperaturunterschied außerhalb eines festgelegten Bereiches mittels Tabelle bestimmt,
- aus dem Temperaturunterschied wird die benötigte Energie zur Temperaturangleichung bestimmt,

- aus der benötigten Energie wird auf den benötigten Strom i₂ zurückgerechnet.

Es kann vorgesehen sein, dass zum Herstellen einer Schweißnaht eines widerstandsstumpfgeschweißten Stahlbandes durch Verbinden von zwei Enden durch Schweißen, wobei die Enden Enden des Stahlbandes oder Enden von zwei Einzelteilen des Stahlbandes sind,
wobei

- die beiden Enden in eine Klemmvorrichtung eingespannt werden,
- die beiden Enden so aneinandergepresst werden, dass ein Kontakt an den Stoßflächen über die gesamte Querschnittsfläche entsteht,
- ein Strom angelegt wird, der die Schweißstelle bis auf Schweißtemperatur erhitzt, wobei bei Erreichen der erforderlichen Temperatur der Strom abgeschaltet und die beiden Enden mittels Vorschubbewegung aufeinander gestaucht und zu dem Stahlband geschweißt werden,

die Schweißnaht nach einem der vorhergehenden Ansprüche abgekühlt wird.

Weiterhin besteht die Möglichkeit, dass in einem ersten Zeitabschnitt der Strom als Strom i₁ so eingestellt wird, dass die erzeugte Energie zum Aufheizen des Stahlbandes auf Schweißtemperatur ausreicht und ein einem zweiten Zeitabschnitt der Strom i₂ so eingestellt wird, dass die erzeugte Energie so bemessen ist, dass eine gleichmäßige Temperaturverteilung innerhalb der Schweißnaht während des Abkühlens der Schweißnaht erreicht wird oder erhalten bleibt.

Hierbei kann es vorgesehen sein, dass der Strom i₁ > i₂ ist.

Durch die Änderung des Stroms kann mit nur einer Stromquelle der gesamte Prozess durchlaufen werden. Es ist ohne weiteres möglich, dass zwischen dem ersten und dem zweiten Zeitabschnitt ein Zeitraum liegt, bei dem der Strom vollständig oder nahezu vollständig ausgeschaltet wird. Dies kann insbesondere der Zeitraum sein, in dem die Enden des Stahlbandes durch eine Vorschubbewegung aufeinander zu bewegt werden.

Über den Temperaturunterschied wird auf die benötigte Energie zur Temperaturangleichung geschlossen. Es besteht auch die Möglichkeit durch Versuchsreihen die Energie zu bestimmen, die für eine Erhöhung der Temperatur innerhalb der Schweißnaht nötig ist. Auf Basis der joulschen Stromwärme eines durch die Schweißnaht fließenden elektrischen Stromes kann von einem bekannten Widerstandswert auf den Strombedarf geschlossen werden. In erster Näherung kann hier die Gleichung $W_s = I_2^2 R_s t_s$ ein Ansatz sein. Hierbei ist $W_s$ die benötigte Energie, $R_s$ der Widerstand an der Schweißnaht an der betrachteten Stelle, $t_s$ die Zeit und $I_2$ der Strom im zweiten Zeitabschnitt.

Für diese Art der Steuerung des Abkühlens ist es wichtig, die spezifischen Eigenschaften des verwendeten Materials zu kennen.

Für Stahlbänder kommen beispielsweise Edelstähle, Vergütungsstähle und/oder Kohlenstoffstähle in Frage. Diese haben unterschiedliche Widerstandwerte für unterschiedliche Temperaturen.

In der folgenden Tabelle sind beispielhaft die temperaturabhängigen Widerstandswerte für Stahl gezeigt.

| Stahl | | | |
|---|---|---|---|
| Temp [°C] | Widerstand [Ω] | Widerstand [μΩ] | Änderung Widerstand[%] |
| 20 | 0,00017361 | 173,61 | 32% |
| 100 | 0,00025139 | 251,39 | 46% |
| 200 | 0,00034861 | 348,61 | 64% |
| 300 | 0,00044583 | 445,83 | 82% |
| 400 | 0,00054306 | 543,06 | 100% |
| 500 | 0,00064028 | 640,28 | 118% |
| 600 | 0,00073750 | 737,50 | 136% |
| 700 | 0,00083472 | 834,72 | 154% |
| 800 | 0,00093194 | 931,94 | 172% |

Der Widerstandswert bei 400°C wird =100% gesetzt, da diese Temperatur als Schweißtemperatur angenommen wird. Dieser Wert ist bei anderen Prozessen entsprechend auch anders wählbar. Im vorliegenden Fall ist dieser Wert gewählt, da bei dieser Temperatur die Schweißtemperatur einiger Materialien erreicht ist.

In Untersuchungen hat sich gezeigt, dass innerhalb einer abkühlenden Schweißnaht Temperaturunterschiede von 200° bis 300° üblicherweise vorliegen.

Anhand der vorliegenden Tabelle ist daraus ablesbar, dass bei einem Temperaturunterschied von $\pm 200°$ von der Normtemperatur 400° der Widerstand auf 64% (bei 200°) absinkt bzw. auf 136% (bei 600°) ansteigt bezogen auf den Widerstandswert bei 400°.

In dem zweiten Zeitabschnitt wird ein Strom angelegt, der die Temperatur innerhalb der Schweißnaht vergleichmäßigen soll. Dabei ist es natürlich, dass der Strom in den Bereichen mit einem geringeren Widerstand stärker fließt als in den Bereichen mit höherem Widerstand. In den Bereichen mit einem größeren Stromfluss wird das Stahlband dann wiederum stärker erwärmt. Dies führt dann zu einer Angleichung der Temperatur in der Schweißnaht.

Durch eine Überwachung der Temperatur der Schweißnaht wird auf den Widerstand an jeder Stelle geschlossen. Damit wird dann die benötigte Energie ermittelt, die für eine gewünschte Temperatur innerhalb der Schweißnaht nötig ist.

Mit diesem Verfahren ist es möglich, das Abkühlen der Schweißnaht so zu steuern, wie es für die gewünschten Materialeigenschaften nötig ist.

Gemäß Anspruch 4 wird eine Vorrichtung zum Herstellen einer Schweißnaht eines widerstandsstumpfgeschweißten Stahlbandes durch Verbinden von zwei Enden durch Schweißen, wobei die Enden Enden des Stahlbandes oder Enden von zwei Einzelteilen des Stahlbandes sind, vorgesehen, die ein Steuer und/oder Regelungsmittel aufweist, wobei das Steuer und/oder Regelungsmittel geeignet und eingerichtet ist ein Verfahren nach einem der Ansprüche 1-3 durchzuführen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

Fig. 1 ein Ablaufdiagramm eines Verfahrens gemäß den Ansprüchen

Fig. 2a, 2b eine vereinfachte Darstellung eines Stahlbandes mit einer Schweißnaht

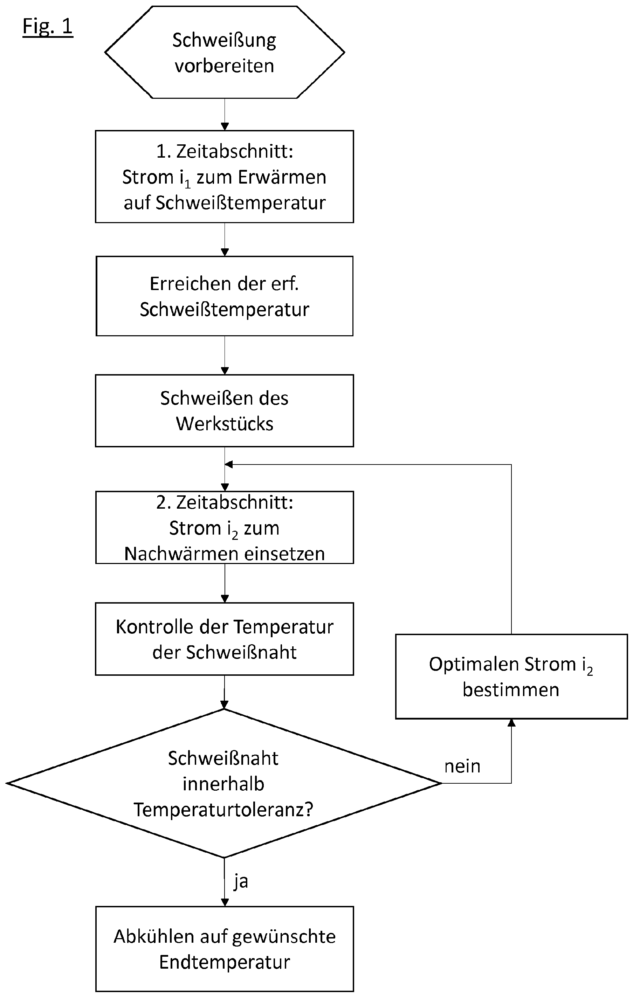

Figur 1 zeigt ein Flussdiagramm zur Veranschaulichung der Abkühlung einer Schweißnaht gemäß der vorliegenden Erfindung.

Zunächst werden alle vorbereitenden Maßnahmen für den Schweißvorgang durchgeführt. Dazu gehören beispielsweise das Einspannen der Enden und andere Arbeiten.

In einem ersten Zeitabschnitt wird ein erforderlicher Strom $i_1$ angelegt, der die Enden auf Schweißtemperatur erhitzt. Sobald diese Temperatur erreicht ist, wird der Strom $i_1$ des ersten Zeitabschnitts ausgeschaltet und das Stahlband durch eine Vorschubbewegung der Enden aufeinander zu bewegt. Die eigentliche Schweißung des Stahlbandes wird durchgeführt.

Nachdem der Strom des ersten Zeitabschnitts wegfällt, beginnt das Abkühlen des Stahlbandes und damit auch der Schweißnaht.

Ohne weitere Maßnahmen würde die Schweißnaht ungleichmäßig bis auf Umgebungstemperatur abkühlen. Durch die auftretenden Temperaturunterschiede können Fehlstellen in der Schweißnaht auftreten, die zu unterschiedlichen Härten des Materials führen würden. Diese Qualitätsunterschiede sind in den meisten Fällen nicht erwünscht und führen zu einem Ausschuss des Stahlbandes. Aus diesem Grund wird den Enden in einem zweiten Zeitabschnitt ein Strom $i_2$ zum Nachwärmen der Schweißnaht zugeführt.

Durch eine geeignete Überwachung der vorhandenen Temperatur, vorstellbar ist hier beispielsweise eine optische Kontrolle der Schweißnaht mit einem Pyrometer, wird die sich einstellende Temperatur überwacht.

Liegt die Temperatur innerhalb eines vorher festgelegten Toleranzbandes der Temperatur zum Zeitpunkt des Abkühlens, wird der Abkühlvorgang fortgesetzt bis die gewünschte Endtemperatur erreicht ist.

Wird von diesem festgelegten Toleranzband abgewichen, muss der optimale Strom $i_2$ für den zweiten Zeitabschnitt bestimmt werden.

Es sind unterschiedliche Varianten für den Stromverlauf vorstellbar.

Beispielsweise kann nicht gemäß der Erfindung der Strom so eingestellt werden, dass er sich linear über einen Zeitraum verringert oder pulsartig über einen Zeitraum erfolgt. Werden Abweichungen von der Temperatur festgestellt, kann der Stromverlauf angepasst werden.

Durch die aufgezeigten Widerstandsunterschiede erwärmen sich Bereiche mit einer niedrigeren Temperatur stärker als Bereiche mit einer höheren Temperatur. Dies wird bei der Bestimmung des optimalen Stroms ebenfalls genutzt.

Die ermittelte Temperatur wird einem bestimmten Widerstandswert zugewiesen. Aus diesem wiederum wird die Leistung bestimmt, die benötigt wird, um die Schweißnaht auf die gewünschte Temperatur zu bringen.

Ist der optimale Strom bestimmt, wird dieser so eingesetzt, dass die Schweißnaht nachgewärmt wird.

Der Vorgang wird so lange durchgeführt bis die Schweißnaht unter der gewünschten Abkühlung die Endtemperatur erreicht hat.

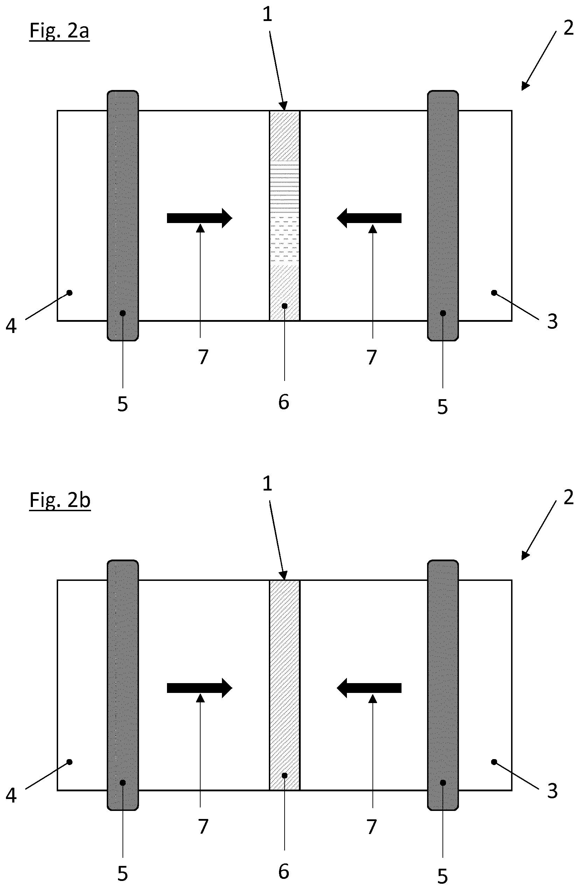

In Figur 2a und Figur 2b werden vereinfachte Darstellungen von einem Stahlband 2 mit einer Schweißnaht 1 gezeigt. Die beiden Enden 3, 4 des Stahlbandes 2 sind in eine Klemmvorrichtung 5 eingespannt, wobei jedes Ende 3, 4 von einer eigenen Klemme 5 gehalten wird.

Über die Klemmen 5 wird der benötigte Strom dem Stahlband 2 zugeführt. Nach Erreichen der erforderlichen Schweißtemperatur werden die beiden Enden 3, 4 durch eine Vorschubbewegung 7 aufeinander zu bewegt. In dem vorliegenden Fall wird die Vorschubbewegung 7 durch die Klemmen 5 durchgeführt. Es ist aber ohne weiteres möglich, dass eine andere Vorrichtung vorhanden ist, die die Vorschubbewegung 7 ausführt.

Figur 2a zeigt eine Temperaturverteilung 6 in der Schweißnaht 1, die auftritt, wenn das Abkühlen der Schweißnaht 1 ohne weitere Überwachung bei Umgebungstemperatur erfolgt. Es bilden sich unterschiedliche Bereiche mit unterschiedlichen Temperaturen aus. Die Figur 2a zeigt diese Bereiche angedeutet durch verschiedene Schraffierungen.

Wird das natürliche Abkühlungsverhalten durch einen gezielten Einsatz von einem nachwärmenden Strom gesteuert, kann sich vorteilhafterweise eine Temperaturverteilung 6 in der Schweißnaht 1 ausbilden, wie sie in Figur 2b gezeigt ist.

Die gesamte Schweißnaht 1 zeigt hier eine gleichmäßige Temperaturverteilung 6. Das genaue Toleranzband für eine gleichmäßige Temperaturverteilung 6 ist abhängig von dem verwendeten Material des Stahlbandes 2 und den Qualitätsanforderungen an die Härteunterschiede im Material.

Die Temperaturtoleranz sollte für jeden Prozess im Vorhinein festgelegt werden. Bei einer anfänglichen Schweißtemperatur von 400° ist es vorstellbar, dass das Abkühlen mit einem Toleranzbereich von $\pm$ 10% stattfinden kann. Andere Werte sind je nach den Erfordernissen an die Schweißung möglich.

**Patentansprüche**

1. Verfahren zum Abkühlen einer Schweißnaht (1) eines widerstandsstumpfgeschweißten Stahlbandes (2) nach einem Verbinden von zwei Enden (3, 4) durch Schweißen, wobei die Enden (3, 4) Enden (3, 4) des Stahlbandes (2) oder Enden von zwei Einzelteilen des Stahlbandes (2) sind, **wobei** das Abkühlen gesteuert wird und sich von einem natürlichen Abkühlungsverhalten der Schweißnaht (1) bei Umgebungstemperatur unterscheidet, wobei während des Abkühlens ein Strom $i_2$ durch die Schweißnaht (1) geleitet wird,
   **dadurch gekennzeichnet, dass**
   der Strom $i_2$ folgendermaßen eingestellt wird:

   - eine tatsächliche Temperaturverteilung innerhalb der Schweißnaht (1) wird überwacht,
   - bei Temperaturabweichungen wird der ohmsche Widerstandswert an den Stellen der Schweißnaht mit einem Temperaturunterschied außerhalb eines festgelegten Bereiches mittels einer Tabelle bestimmt,
   - aus dem Temperaturunterschied wird eine benötigte Energie zur Temperaturangleichung bestimmt,
   - aus der benötigten Energie wird auf den benötigten Strom $i_2$ zurückgerechnet.

2. Verfahren nach Anspruch 1, **dadurch gekennzeichnet, dass** das Abkühlen derart gesteuert wird, dass durch Einstellen des Stromes $i_2$ und durch die Überwachung der vorhandenen Temperatur die Temperaturverteilung (6) innerhalb der Schweißnaht (1) erreicht wird, die die Temperaturunterschiede während des Abkühlens innerhalb der Schweißnaht auf $\pm$ 10% begrenzt.

3. Verfahren zum Herstellen einer Schweißnaht (1) eines widerstandsstumpfgeschweißten Stahlbandes (2) durch Verbinden von zwei Enden (3, 4) durch Schweißen, wobei die Enden (3, 4) Enden des Stahlbandes (2) oder Enden von zwei Einzelteilen des Stahlbandes (2) sind, wobei

   - die beiden Enden (3, 4) in eine Klemmvorrichtung (5) eingespannt werden,
   - die beiden Enden (3, 4) so aneinandergepresst werden, dass ein Kontakt an den Stoßflächen über die gesamte Querschnittsfläche entsteht,
   - ein Strom angelegt wird, der die Schweißstelle bis auf Schweißtemperatur erhitzt, wobei bei Erreichen der erforderlichen Temperatur der Strom abgeschaltet und die beiden Enden (3, 4) mittels Vorschubbewegung (7) aufeinander gestaucht und zu dem Stahlband (2) geschweißt werden,

   wobei die Schweißnaht (1) nach einem der Ansprüche 1 bis 2 abgekühlt wird.

4. Vorrichtung zum Herstellen einer Schweißnaht (1) eines widerstandsstumpfgeschweißten Stahlbandes (2) durch Verbinden von zwei Enden (3, 4) durch Schweißen, wobei die Enden (3, 4) Enden (3, 4) des Stahlbandes (2) oder Enden von zwei Einzelteilen des Stahlbandes (2) sind, aufweisend

- eine Stromquelle,
- Mittel zur Überwachung der Temperaturverteilung innerhalb der Schweißnaht,
- eine Klemmvorrichtung (5), wobei die beiden Enden (3, 4) des Stahlbandes (2) in die Klemmvorrichtung (5) eingespannt sind und über die Klemmvorrichtung (5) der benötigte Strom dem Werkstück zugeführt wird,
- eine Vorschubvorrichtung, wobei die Vorschubvorrichtung die beiden Enden (3, 4) des Stahlbandes (2) durch eine Vorschubbewegung (7) aufeinander zu bewegt, und
- ein Steuer und/oder Regelungsmittel, wobei das Steuer und/oder Regelungsmittel geeignet und eingerichtet ist ein Verfahren nach einem der Ansprüche 1 bis 3 durchzuführen.

**Claims**

1.  A method of cooling a weld seam(1) of a resistance butt-welded steel strip (2) after joining two ends (3, 4) by welding, wherein the ends (3, 4) are ends (3, 4) of the steel strip (2) or ends of two individual parts of the steel strip (2), **wherein** the cooling is controlled and differs from a natural cooling behaviour of the weld seam (1) at ambient temperature , wherein a current $i_2$ is passed through the weld seam (1) during the cooling,
    **characterised in that**
    the current $i_2$ is set as follows:

    - an actual temperature distribution within the weld seam (1) is monitored,
    - in the event of temperature deviations, the ohmic resistance value at the points of the weld seam with a temperature difference outside a defined range is determined by means of a table,
    - the temperature difference is used to determine the energy required to equalise the temperature,
    - the required energy is used to calculate the required current i2.

2.  Method according to claim 1, **characterised in that** the cooling is controlled in such a way that by setting the current $i_2$ and by monitoring the existing temperature, the temperature distribution (6) within the weld seam (1) is achieved, which limits the temperature differences during cooling within the weld seam to $\pm$ 10% .

3.  Method for producing a weld seam (1) of a resistance butt-welded steel strip (2) by joining two ends (3, 4) by welding, wherein the ends (3, 4) are ends of the steel strip (2) or ends of two individual parts of the steel strip (2), wherein

    - the two ends (3, 4) are clamped in a clamping device (5),
    - the two ends (3, 4) are pressed together in such a way that contact is made at the joint surfaces over the entire cross-sectional area,
    - a current is applied which heats the welding point up to welding temperature, whereby when the required temperature is reached the current is switched off and the two ends (3, 4) are pressed together by means of a feed movement (7) and welded to form the steel strip (2),

    wherein the weld seam (1) is cooled according to one of claims 1 to 2.

4.  Apparatus for producing a weld seam (1) of a resistance butt-welded steel strip (2) by joining two ends (3, 4) by welding, wherein the ends (3, 4) are ends (3, 4) of the steel strip (2) or ends of two individual parts of the steel strip (2), comprising

    - a power source,
    - means for monitoring the temperature distribution within the weld seam (1),
    - a clamping device (5), wherein the two ends (3, 4) of the steel strip (2) are clamped in the clamping device (5) and the required current is supplied to the workpiece via the clamping device (5),
    - a feed device, wherein the feed device moves the two ends (3, 4) of the steel strip (2) towards each other by a feed movement (7), and
    - a control means, wherein the control means is suitable and set up to carry out a method according to one of claims 1 to 3.

**Revendications**

1.  Procédé de refroidissement d'un cordon de soudure (1) d'une bande d'acier (2) soudée bout à bout par résistance après un assemblage de deux extrémités (3, 4) par soudage, les extrémités (3, 4) étant des extrémités (3, 4) de la bande d'acier (2) ou des extrémités de deux parties individuelles de la bande d'acier (2), le refroidissement étant commandé et se distinguant d'un comportement de refroidissement naturel du cordon de soudure (1) à température ambiante , un courant $i_2$ étant conduit à travers le cordon de soudure (1) pendant le refroidissement,

**caractérisé en ce que**

le courant $i_2$ est réglé comme suit:

- une répartition réelle de la température à l'intérieur du cordon de soudure (1) est surveillée,
- en cas d'écarts de température, la valeur de résistance ohmique aux endroits du cordon de soudure présentant une différence de température en dehors d'une plage définie est déterminée au moyen d'un tableau,
- à partir de la différence de température, on détermine une énergie nécessaire à l'ajustement de la température,
- à partir de l'énergie nécessaire, on recalcule le courant $i_2$nécessaire.

2. Procédé selon la revendication 1, **caractérisé en ce que** le refroidissement est commandé de telle sorte qu'en réglant le courant $i_2$et en surveillant la température existante, on obtient la répartition de température (6) à l'intérieur du cordon de soudure (1) qui limite les différences de température pendant le refroidissement à l'intérieur du cordon de soudure à± 10% .

3. Procédé de fabrication d'un cordon de soudure (1) d'une bande d'acier (2) soudée en bout par résistance en reliant deux extrémités (3, 4) par soudage, les extrémités (3, 4) étant des extrémités de la bande d'acier (2) ou des extrémités de deux parties individuelles de la bande d'acier (2), dans lequel

- les deux extrémités (3, 4) sont serrées dans un dispositif de serrage (5),
- les deux extrémités (3, 4) sont pressées l'une contre l'autre de telle sorte qu'il se produit un contact au niveau des surfaces de jonction sur toute la surface de la section transversale,
- un courant est appliqué, qui chauffe le point de soudage jusqu'à la température de soudage, le courant étant coupé lorsque la température nécessaire est atteinte et les deux extrémités (3, 4) étant refoulées l'une sur l'autre au moyen d'un mouvement d'avance (7) et soudées pour former la bande d'acier (2),

le cordon de soudure (1) étant refroidi selon l'une des revendications 1 à 2.

4. Dispositif de réalisation d'un cordon de soudure (1) d'une bande d'acier (2) soudée bout à bout par résistance par assemblage de deux extrémités (3, 4) par soudage, les extrémités (3, 4) étant des extrémités (3, 4) de la bande d'acier (2) ou des extrémités de deux pièces individuelles de la bande d'acier (2), comprenant

- une source de courant,
- des moyens de surveillance de la répartition de la température à l'intérieur du cordon de soudure (1),
- un dispositif de serrage (5), les deux extrémités (3, 4) de la bande d'acier (2) étant serrées dans le dispositif de serrage (5) et le courant nécessaire étant amené à la pièce par l'intermédiaire du dispositif de serrage (5),
- un dispositif d'avance, le dispositif d'avance déplaçant les deux extrémités (3, 4) de la bande d'acier (2) l'une vers l'autre par un mouvement d'avance (7) et
- un moyen de commande et/ou de régulation, le moyen de commande et/ou de régulation étant apte et agencé pour mettre en œuvre un procédé selon l'une des revendications 1 à 3.

Fig. 1

Schweißung
vorbereiten

1. Zeitabschnitt:
Strom $i_1$ zum Erwärmen
auf Schweißtemperatur

Erreichen der erf.
Schweißtemperatur

Schweißen des
Werkstücks

2. Zeitabschnitt:
Strom $i_2$ zum
Nachwärmen einsetzen

Kontrolle der Temperatur
der Schweißnaht

Optimalen Strom $i_2$
bestimmen

Schweißnaht
innerhalb
Temperaturtoleranz?

nein

ja

Abkühlen auf gewünschte
Endtemperatur

Fig. 2a

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010059488 A1
- WO 2013134112 A2
- GB 688244 A